(19) Europäisches Patentamt
European Patent Office
Office européen des brevets

(11) **EP 2 880 192 B1**

(12) **EUROPEAN PATENT SPECIFICATION**

(45) Date of publication and mention
of the grant of the patent:
**29.03.2017 Bulletin 2017/13**

(21) Application number: **13744491.5**

(22) Date of filing: **26.07.2013**

(51) Int Cl.:
*B32B 15/01* (2006.01)   *C21D 1/20* (2006.01)
*C21D 8/04* (2006.01)   *C21D 9/56* (2006.01)
*C22C 38/58* (2006.01)   *C21D 9/48* (2006.01)
*C22C 38/00* (2006.01)   *C22C 38/02* (2006.01)
*C22C 38/04* (2006.01)   *C22C 38/06* (2006.01)
*C22C 38/18* (2006.01)

(86) International application number:
**PCT/EP2013/065847**

(87) International publication number:
**WO 2014/019964 (06.02.2014 Gazette 2014/06)**

(54) **A METHOD FOR PRODUCING A HIGH STRENGTH STRIP STEEL WITH A GOOD DEEP DRAWABILITY AND A HIGH STRENGTH STEEL PRODUCED THEREBY**

VERFAHREN ZUR HERSTELLUNG EINES HOCHFESTEN BANDSTAHLS MIT GUTER TIEFZIEHBARKEIT UND DAMIT HERGESTELLTER HOCHFESTER STAHL

PROCÉDÉ DE PRODUCTION D'UN BANDE D'ACIER À HAUTE RÉSISTANCE AVEC UNE BONNE APTITUDE À L'EMBOUTISSAGE PROFOND ET ACIER HAUTE RÉSISTANCE AINSI PRODUIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2012 EP 12178555**
**31.07.2012 EP 12178584**

(43) Date of publication of application:
**10.06.2015 Bulletin 2015/24**

(73) Proprietor: **Tata Steel Nederland Technology B.V.**
**1951 JZ Velsen-Noord (NL)**

(72) Inventor: **LIU, Cheng**
**NL-1970 CA IJmuiden (NL)**

(74) Representative: **Bodin, Andre**
**Tata Steel Nederland Technology B.V.**
**Group Intellectual Property Services**
**P.O. Box 10000 - 3G.37**
**1970 CA IJmuiden (NL)**

(56) References cited:
**EP-A1- 2 439 291**   **DE-A1- 19 918 484**
**US-A- 5 810 948**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to a method for producing a high strength strip steel with a good deep drawability and a high strength steel produced thereby.

Car manufacturers focus the main design criteria of a modern car on reduced weight and high safety in order to fulfil the customer's expectations and the legal requirements and standards. In this context, new steel grades have been developed not only for weight saving but also to improve crash safety of vehicles. These steels combine an increased formability with a high strength level at a wide strain rate spectrum. Advanced high strength steels, among them especially dual phase and TRIP steels, feature promising results in this field, while their extraordinary mechanical properties can be tailored and adjusted by alloying and processing. Different phases with a wide variety of strength levels together with an extraordinary fine microstructure contribute to the excellent cold formability and crash behaviour of AHSS.

AHSS are multiphase steels which contain phases like martensite, bainite and retained austenite in quantities sufficient to produce unique mechanical properties. Compared to conventional high strength steels, AHSS exhibit higher strength values or a superior combination of high strength with good formability (Bleck, W.; Phiu-On, K., Grain Refinement and Mechanical Properties in Advanced High Strength Sheet Steels, HSLA Steels 2005, Fifth International Conference on HSLA Steels, 08.-10.11.2005, Sanya, Hainan, China). In principle one can distinguish four types of AHSS:

- Dual phase: microstructure comprising ferrite and 5-30% martensite
- Transformation Induced Plasticity steels with a microstructure of ferrite, bainite and retained austenite
- PM: partly or fully martensitic steels
- Complex Phase steels with a mixture of strengthened ferrite, bainite and martensite.

Although these advanced high strength steel sheets have excellent strength and formability in terms of the strength-ductility relationship, it is known that these AHSS suffer from a low r-value and therefore a poor deep drawability. For complex automotive stamped parts, the deep drawability can be critical.

EP2439291-A1 discloses a multi-phase steel based on the use of precipitate forming additions such as Ti and V in addition to 0.02 to 0.06% Nb to form precipitates with the C and N present in the steel, produced by subjecting a cold-rolled steel to continuous annealing at a temperature between at least 20 °C higher than the Ac1 temperature and the Ac3 temperature followed by overageing.

It is therefore an object of the invention to provide a method to produce AHSS with an improved r-value.

It is also an object of the invention to provide an AHSS with an improved r-value.

It is another object of the invention to provide an AHSS with an improved r-value while keeping the excellent strength-ductility relationship.

One or more of these objects may be reached by a method for producing a high-strength steel sheet having excellent deep drawability, the method comprising

- producing a hot-rolling precursor by melting and casting a precursor comprising (in wt.%):

  - C: 0.01 to 0.2%;
  - Si: 2.0% or less;
  - Mn: 1.0 to 3.0%;
  - P: 0.005 to 0.1%;
  - S: 0.03% or less;
  - Al_sol: 0.01 to 0.1%;
  - Cr: 2.0% or less
  - N: 0.002 to 0.01%;
  - Remainder Fe and inevitable impurities

wherein Ti and B as impurities should be kept as low as possible and wherein $N-14/48*Ti-14/11*B \geq 0.0015\%$ the precursor optionally also comprising

  - Ca: 0.0005 to 0.01%;
  - Mo: 0.8% or less
  - Cu: 0.8% or less
  - Ni: 0.8% or less

- reheating the precursor material to a temperature of at least 1100°C to dissolve all, or at least most, AlN-precipitates or in case of a thin slab cast precursor or strip-cast precursor to be rolled immediately after casting, maintaining the temperature at a temperature of at least 1100°C to prevent, or at least substantially reduce, AlN from forming;

- hot rolling the precursor to a hot-rolled strip by hot rolling at a finishing temperature above Ar3;
- cooling the hot-rolled strip to a temperature so as to substantially prevent precipitation of AlN in the hot-rolled strip followed by:

  a. coiling the hot rolled strip at a temperature of at most 650°C, or by
  b. coiling the hot rolled strip at a temperature of at most 700°C and subsequently cooled by full immersion of the coil in a water bath and cooled to a temperature of 600°C or lower

- pickling the cooled hot-rolled strip;
- cold-rolling the hot-rolled strip with a reduction in thickness of between 50 and 90%;
- batch recrystallisation annealing the cold-rolled strip at a temperature of between 550°C and Ac1 to achieve a favourable crystallographic texture for deep-drawing;
- cooling the recrystallised strip;
- continuous intercritical annealing of the recrystallised strip by reheating the strip to a temperature between Ac1 and Ac3, holding the strip between Ac1 and Ac3 for at most 600 seconds to obtain a microstructure comprising at most 50% austenite, preferably at most 30%, followed by cooling from the holding temperature to an intermediate temperature of 350-500°C at a cooling rate of between 1 and 100°C/s and followed by

  a. cooling without delay from the intermediate temperature to a temperature between ambient temperature and 200°C at a cooling rate of between 1 and 100°C/s, or

  b. holding the strip at the intermediate temperature of between 350 and 500°C for a period of time which is not more than 600s;

- wherein the final microstructure of the strip after batch annealing and continuous annealing is a microstructure comprising ferrite and one or more second phases such as martensite, residual austenite and/or bainite.

Preferred embodiments are provided in the dependent claims.

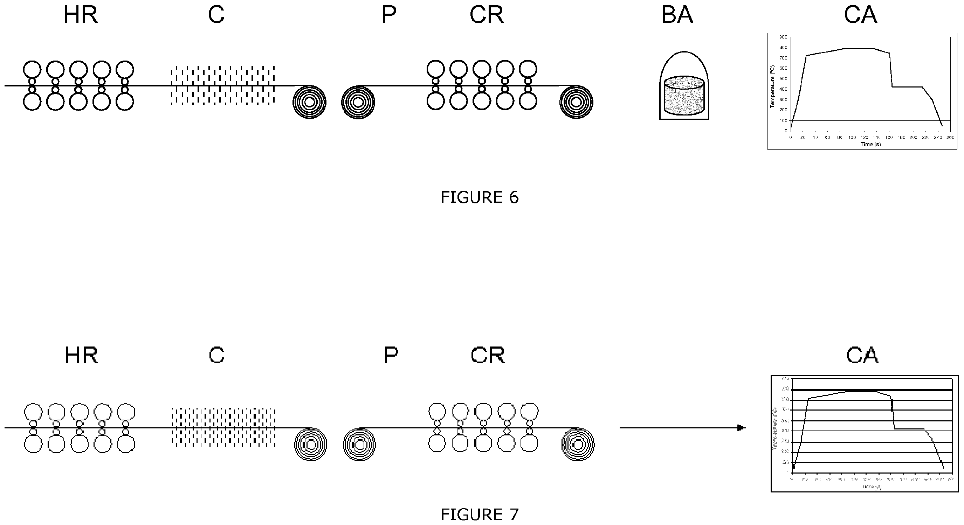

This method achieves a high r-value of the cold-rolled and annealed product by first batch annealing a cold rolled steel to obtain a recrystallised strip followed by a continuous annealing to produce the mixed microstructure of the AHSS as described above. This method deviates from the normal (i.e. conventional) processing route of reheating → hot rolling → cold rolling → continuous annealing. Due to their composition (high C, Mn etc) and annealing in the intercritical (i.e. two-phase α-γ) temperature region, AHSS produced by this (conventional) route have a low r-value. The process according to the invention is as follows: reheating → hot rolling → cold rolling → **batch recrystallisation annealing** → continuous annealing. The batch annealing is to produce a favourable crystallographic texture (high fraction of (111) oriented crystals) and the continuous annealing is to achieve a mixed microstructure of ferrite and the desired second phase (martensite, retained austenite, bainite). Figure 6 gives a schematic representation of subsequent processing steps, wherein HR represents hot rolling, followed by cooling (C), coiling, uncoiling, pickling (P), cold rolling (CR) either in line with pickling or in a separate CR-line, followed by batch recrystallisation annealing (BA) and continuous annealing (CA) to produce the desired final microstructure, whereas figure 7 shows the conventional (prior art) route.

Alternative ways to achieve higher r-value is by cold rolling → annealing → cold rolling → annealing. The process according to the invention eliminates one cold rolling step and is therefore cost effective. Still another processing is as follows: ferritical hot-rolling with good lubrication → annealing → cold rolling → continuous annealing. This alternative process is complicated and needs substantially modifications of existing hot rolling facility. Moreover, the anisotropy of the ferritically hot-rolled products is quite restrictive.

It is important that the composition of the steel produced using the method according to the invention contains no nitride forming elements other than aluminium, i.e. no Ti, Nb, V, Zr or B-additions. These nitride forming elements Ti, B, Nb, V, and Zr may only be present as impurities. It is necessary that N-(14/48)*Ti-(14/11)*B ≥ 0.0015%. This guarantees that free nitrogen is available to bind to aluminium and influence the texture favourably during the annealing process. Preferably N-(14/48)*Ti-(14/11)*B-(14/93)*Nb-(14/51)*V-(14/91)*Zr ≥ 0.0015%.

The aluminium content in the steel is expressed as Al_sol (acid soluble), meaning that the aluminium is not bound to oxygen. The killing of the steel during steelmaking requires the addition of a deoxidant, usually aluminium and sometimes silicon, to bind the oxygen into alumina. The majority of that alumina is removed from the melt, but any alumina remaining behind in the steel is not available any longer for binding to nitrogen. The process from preparing the melt and producing a hot-rolling precursor by melting and casting a precursor, such as a thick slab, a thin slab or a cast strip, is fairly straightforward. Austenitic finish hot-rolling is important to create a fine equiaxed structure of the hot rolled strip, and in the cooling stage of the hot rolled strip it is essential that the precipitation of aluminium-nitride is prevented. AlN that precipitates in the hot strip is no longer available for precipitation during the batch-annealing after cold rolling and is therefore no longer beneficial in achieving the right crystallographic texture. The aluminium and nitrogen should be in solid solution in the cooled hot-rolled strip. Also any cementite that precipitates in the hot strip after hot-rolling should be as fine as possible. After pickling and cold rolling of the hot rolled strip the cold-rolled full-hard strip is subjected to recrystallisation annealing by batch annealing. Precipitation of aluminium nitride (AlN) inhibits nucleation so that the most favoured (111)-grains are promoted. (111)-grains represent 'cube on corner' grains and this orientation of the crystal planes in the microstructure is favourable for deep-drawing, i.e. for the r-value. This requires optimal slow heating to allow precipitation to occur at an early stage of recrystallisation, as in batch annealing. The effect of the AlN precipitation is to reduce the number of nuclei so that the recrystallised structure has larger (pancake-shaped) grains resulting in a stronger (111)-texture which is favourable for good r-values. In an embodiment the batch annealed and subsequently continuous annealed strip has a gamma-fibre texture (i.e. {111}-fibre) of at least 5 times random. Preferably the ratio of gamma-fibre texture over 'cube-on-face' texture ({100}) is at least 2, preferably at least 3, more preferably at least 4.

When continuously annealing the recrystallised strip the ferritic or cementite, or ferritic- pearlitic microstructure starts to transform into austenite, and depending on the maximum temperature of the annealing, the ratio of newly formed austenite and untransformed ferrite differs. By keeping the annealing temperature down, the fraction transforming to austenite is limited. If present, the pearlite fraction and cementite will transform to austenite first. The amount of ferrite, with the already favourable texture, transforming to austenite is to be as small as possible, and therefore the annealing temperature should not be too high. Too high an annealing temperature will also reduce the average carbon content in the austenite, and therefore the critical cooling rate for the austenite transforming to the desired microstructure needs to be higher as well. As a result of the fast cooling a part of the austenite, enriched in carbon, will transform into the desired second phase (martensite, bainite) or stay untransformed as retained austenite. The latter depends on the enrichment of the austenite and the presence of any austenite stabilising alloying elements such as manganese and nickel. The cooling after intercritical annealing has to be fast enough to induce the desired second phase as martensite or bainite to form. The fast cooling is continued to an intermediate temperature of between 350 and 500°C. At that stage of the process the choice is to continue cooling to a temperature between 200°C and ambient temperature (for instance on a continuous annealing line without an overageing section), to hold the strip at this intermediate temperature for a short period of time (for instance on a continuous annealing line with an overageing section), and/or to subject the strip to hot dip galvanizing by dipping the strip in a bath of molten metal, usually a zinc bath or zinc based alloy. The zinc based alloy may be alloyed with aluminium and or magnesium such as Magizinc®. The strip may also be coated by means of electrocoating such as electrogalvanizing. In that case the cooling does not need to halt at the intermediate temperature but the cooling can be continued without delay to a temperature between 200°C and ambient temperature. Although the cooling rate is prescribed by the fact that it must be sufficiently high to achieve the desired microstructure, the inventors found that a cooling rate between 1-100°C/s, and preferably of at most 50°C/s is adequate to achieve this aim.

For the sake of avoiding misunderstanding: upon reaching the intermediate temperature of between 350 and 500°C three options are available:

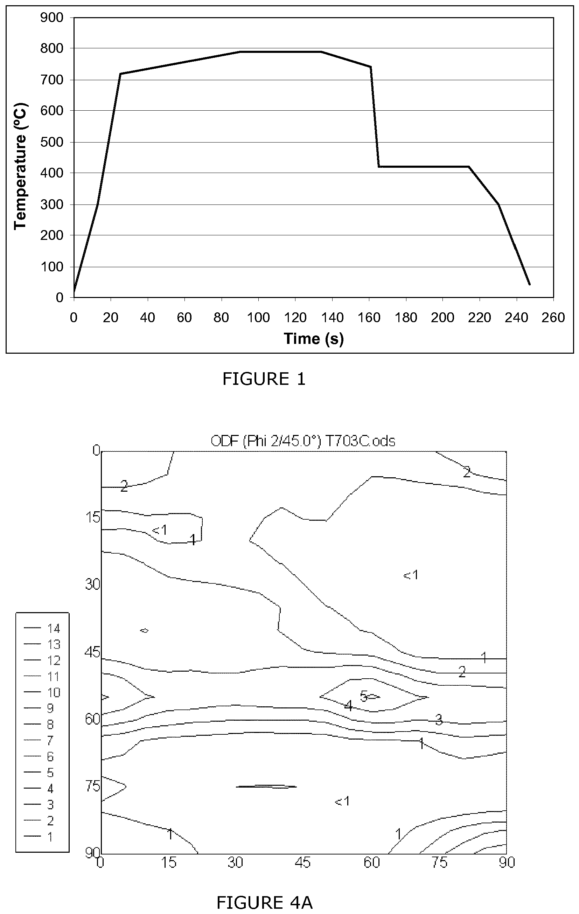

> 1. The strip is held at a temperature between 350 and 500°C for a period of time (overageing), and this period of time is not more than 600 seconds, and preferably not more than 300 seconds (see figure 1) or

> 2. The strip is not held at a temperature between 350 and 500°C for a period of time and the cooling is continued without delay to a temperature to between ambient temperature and 200°C.

> 3. Hot dip galvanising the strip by dipping the strip in a molten zinc or molten zinc-alloy bath. This can be combined with either option 1 or 2.

In an embodiment of the invention the hot rolled strip is coiled at a temperature of at most 600°C or even 550°C.

After finishing the hot rolling, the hot rolled strip is cooled to the coiling temperature. The cooling rate on the run-out table (i.e. after finish hot-rolling and before coiling) is at least 1°C/s and preferably at least 10°C/s.

The coiling temperature should not be chosen too low. The formation of lower bainite structures (forming between around 250 to 400°C) in the hot-rolled coil should be prevented (upper bainite structures forming around between 550 and 400°C are considered allowable) and the formation of pearlite promoted (provided the carbon content is chosen high enough to allow pearlite to be formed). This low coiling temperature ensures that no aluminium nitride precipitates in the coil upon cooling of the hot-rolled strip to ambient temperature. A low coiling temperature is also beneficial to the homogeneous distribution of the aluminium and nitrogen in solid solution along the length of hot rolled coils.

In an embodiment of the invention the hot rolled strip is coiled at a temperature of at most 700°C and subsequently cooled by full immersion of the coil in a water bath and allow it to cool to a temperature of not higher than 600°C, i.e. to a temperature below which the precipitation of AlN does not occur within the timeframe of the process, more preferably to a temperature of not higher than 500°C. The immersion in water should take care of sufficiently fast cooling of the strip to prevent AlN precipitation. As the centre of the coil cools down very slowly, even when immersed in water, the combination of coiling temperature, size of the coil (width of the strip and weight of the strip) should be carefully chosen to avoid any precipitation of AlN in the hot-rolled condition also in the centre of the coil. From a practical point of view, low temperature coiling is preferable over this high temperature option followed by immersion in water. The cooling rate on the run-out table (i.e. after finish hot-rolling and before coiling) to the coiling temperature of at most 700°C is at least 1°C/s and preferably at least 10°C/s. In an embodiment the coiling temperature prior to immersion is at most 650°C.

In an embodiment of the invention the strip during continuous intercritical annealing is held between Ac1 and Ac3 to obtain a microstructure comprising at most 40% austenite, preferably at most 30%. By keeping the amount of austenite down, the amount of ferrite grains transforming is kept down, and the enrichment in carbon of the austenite is increased, thereby maximising the chances of obtaining the desired second phase(s) and retaining as much as possible of the favourable crystallographic texture.

In an embodiment of the invention the reheating temperature of the precursor material is at least 1100°C, preferably at least 1150°C and more preferably at least 1200°C. This high temperature ensures that all, or at least most, of the aluminium nitride formed during the cooling down of the cast slab is dissolved. When hot-rolling in a thin slab-casting-direct rolling facility such as a CSP or a strip-casting - direct rolling facility it is important that the temperature of the cast thin slab or strip does not drop to a level that AlN-precipitation starts. Therefore the homogenisation temperature between casting and rolling must be such that the aluminium and nitrogen stay in solid solution. For this purpose it is preferable that the homogenisation temperature of the precursor material is at least 1100°C, preferably at least 1125°C. A suitable maximum homogenisation temperature would be 1150°C or even 1200°C. The higher the reheating or homogenisation temperature, the higher the likelihood that all Al and N go into or remain in solution. The temperature where all AlN is dissolved depends on the chemistry of the steel, but the kinetics of the precipitation play a role as well.

In an embodiment of the invention the heating rate to the holding temperature during intercritical annealing is between 1 to 40°C/s.

In an embodiment of the invention the strip is provided with a metallic coating by hot dip coating the continuously annealed strip or electrogalvanising.

In an embodiment the cold rolling reduction is at least 60%.

In an embodiment of the invention the heating rate of the batch annealing is at least 5°C/hr and/or at most 50°C/hr. A preferable minimum heating rate is 10 °C/hr. A preferably maximum heating rate is 40°C/hr or even 30°C/hr. In the batch annealing process, 2-5 coils separated by a convector plate are stacked on a furnace base. A protective cover encloses the coil where an inert or reducing gas is circulated. $H_2$ or HNX is commonly used for this purpose. This enclosure is externally heated by a gas or oil fired furnace. The outer and inner surfaces of the coils are heated by convection from the circulating gas and by radiation between cover and coil. The inner portion of the coil is heated through conduction, which is retarded due to the air gaps between the sheets. As a result, during the annealing operation, different locations in the coil undergo different thermal cycles. In an industrial operation, the two locations of special interest are hot spot (near the coil surface with the highest temperature during the heating cycle) and cold spot (in the coil core with the lowest temperature), where by monitoring these two extreme locations, the product quality is controlled. The heating rate of at most 50°C/hr, preferably at most 40°C/hr relates to the heating of the hot spot.

Precipitation of aluminium nitride (AlN) inhibits nucleation by pinning the deformed grain boundaries so that the most favoured (111) grains are promoted. This requires optimal slow heating to allow precipitation to occur at an early stage of the annealing to allow the pan-cake grains to form. Too slow a heating rate will result in too long an annealing process, which is not economic. Moreover, the risk of recovery of the full hard microstructure is avoided. Too high a heating rate means that the recrystallisation starts well before the AlN precipitation is able to pin the grain boundaries. To avoid excessive grain growth it is important to limit the soaking time during batch annealing. Soaking time is defined as the time during which the hot spot is at the annealing temperature. During that time the cold spot also reaches the annealing temperature. After the cold spot reaches the annealing temperature the cooling of the coil can start. After the required temperature is reached at the cold spot, the furnace is removed from over the bell and the charge is cooled, still under protective atmosphere, by forced circulation of the atmosphere gas, which is cooled by heat exchangers. According to 'The Book of Steel, Lavoisier Publishing, ©1996, p. 1272' for HNX furnaces the duration of cooling is about 28 h, and for a hydrogen furnace 22.5h, resulting in an average cooling of less than 1°C/min. This cooling rate can be accelerated by using water cooled bells, or by removing the bell prematurely, but oxidation of the coil should be prevented.

In an embodiment of the invention the hot-rolling finishing temperature is at least Ar3+20°C. This ensures that the strip is finished while still being austenitic and austenitic finishing hot-rolling is important to create a fine equiaxed structure of the hot rolled strip.

The invention is now further explained by means of the following, non-limitative example.

A steel composition as given in table 1 was used. This is a composition that can be used for producing cold-rolled and continuously annealed DP500.

**Table 1:** Chemical composition (in 1/1000 wt.% (except P and N (in ppm)).

| Cast # | C | Mn | Cr | Al | Si | S | P | Ti | B (ppm) | Si | Nb | V | Zr | Cu | Ni | N (ppm) |
|---|---|---|---|---|---|---|---|---|---|---|---|---|---|---|---|---|
| 703 | 45 | 1890 | 20 | 44 | 10 | 5 | 3 | 1 | 0.7 | 6 | 0 | 1 | 0 | 9 | 14 | 38 |

This chemical composition results in 0.0023% N (i.e. 23 ppm) available for precipitation with aluminium as AlN if Ti, Nb, V, Zr and B is taken into account and 0.0026 (i.e. 26 ppm) if Ti and B are taken into account.

From this composition hot-rolled strip was produced at a thickness of 4 mm, finished at about 870°C, and coiled at a temperature of 580°C. These hot-rolled strips were subsequently pickled and cold rolled to 1 mm (i.e. 75% cold reduction) or to 1.32 mm (67% CR). The microstructure after hot rolling consisted of ferrite and pearlite.

The cold-rolled samples were subsequently batch annealed by two step heating: 200°C/h to 500°C, holding at 500°C for 5 hours, then heating to 680°C at a heating rate of 20°C/h, soaking temperature is 700°C and soaking time is 15 hours. These values relate to the hot spot and the holding at 500°C is intended to limit or prevent any differences between the microstructure of the hot spot and that of the cold spot. For the cold spot the corresponding heating rate is 23°C/h. This is to simulate $H_2$-annealing. For HNX annealing: the corresponding cold spot heating rate is about 15°C/h. The cooling rate after BA is known to be below 1°C/min in the conventional process.

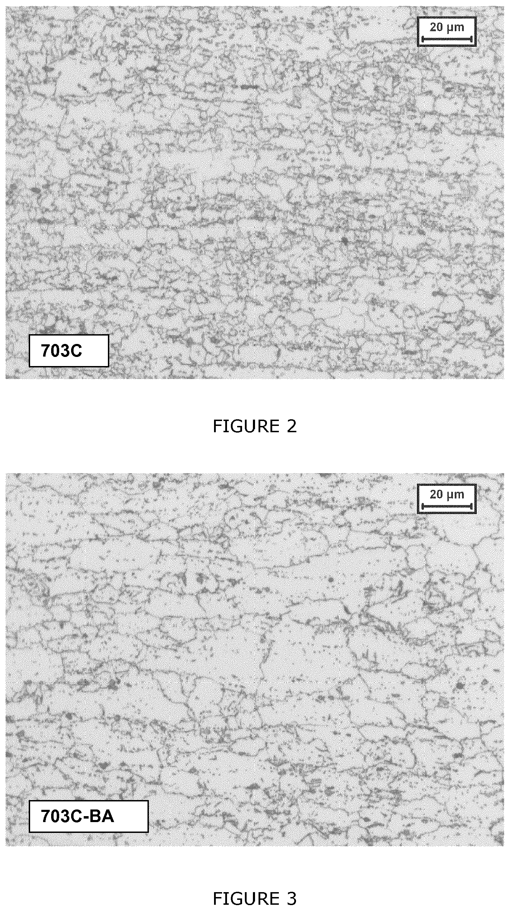

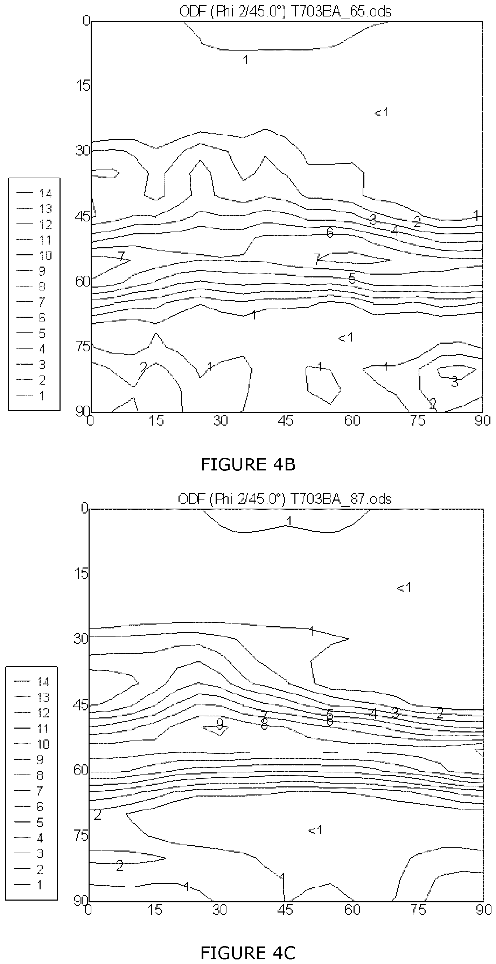

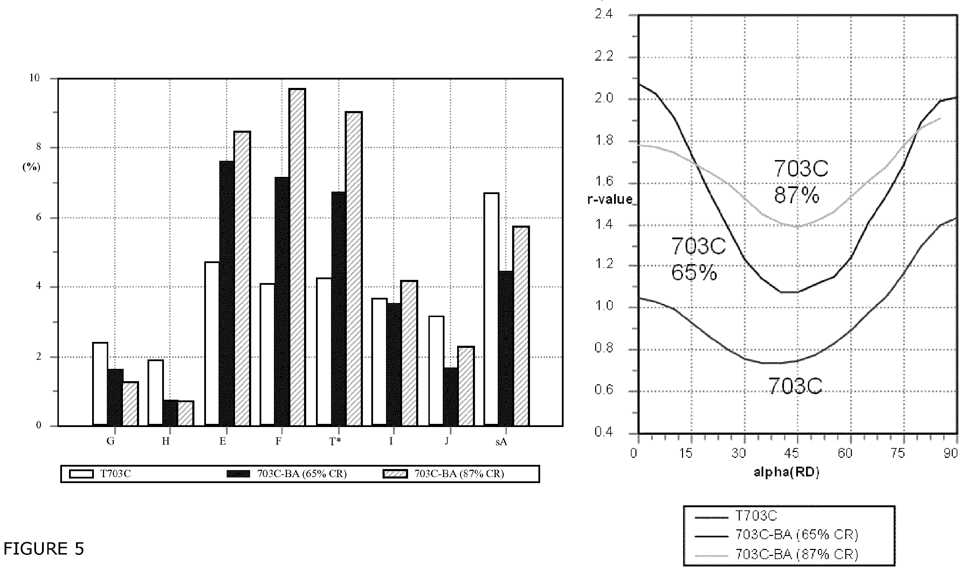

The continuous intercritical annealing was performed as follows: heating to 720°C at 29°C/s, then slow heating to 790°C at 1.1°C/s, soaking for 44 seconds, then slow cooling to 740°C at 1.9°C/s, then fast cooling to 470°C at 61°C/s, holding at the intermediate temperature of 470°C for 48 seconds and followed by hot dip galvanising, after galvanising cooling to 25°C at 33°C/s. The microstructure of the continuously annealed steel is presented in figure 2 (703C without BA) and 3 (703C-BA with BA), and the crystallographic texture in Figure 4A (Orientation Distribution Function (ODF) section at $\Phi_2$=45° where $\phi 1$ is on the horizontal axis and $\phi$ on the vertical axis). Figure 4 reveals a well developed $\gamma$-fibre (at $\phi 1$=0°, and $\phi$=55°) for the samples B and C which is indicated as 703C-BA in comparison to 703C A. The intensities on the continuous $\gamma$-fibre for 703C-BA are at least 5 (times random) with a maximum above 7 (figure 4B) or 9 (figure 4C), whereas for 703C (figure 4A) the continuous value is at least 3 with a maximum of 5. The disadvantageous (100)-intensity, representing the 'cube on face' orientation is smaller for 703C-BA (between 1 and 2) than for 703C (between 2 and 3). The latter sample was not batch-annealed in between cold rolling and continuous annealing and is therefore representative of the known (prior art) process. The difference in texture in Figure 4 is reflected in the r-values of both specimens (see table 2 and figure 5). Figure 5 shows a number of specific crystallographic orientations where E, F and T* are favourable textures for deep-drawing, and e.g. H and G are unfavourable. The BA-samples have significantly larger amounts of E, F and T* than the 703C-sample, whereas the opposite is the case for H and G. The effect of the AlN precipitation is retardation of the recrystallisation reaction while the nucleation process is more selective towards {111} grains, so that the recrystallised structure has larger (pancake-shaped) grains resulting in a stronger {111}-texture which is favourable for good r-values. The subsequent continuous annealing retains this favourable texture by annealing in the intercritical range and strengthens the material by rapid cooling after annealing.

Figure 4 shows the ODF $\phi 2$=45°-section with isolines of 1-2-3-4-etc. This reveals that the 703C-BA has a more favourable texture than the 703C, particularly visible in the top half of the $\phi_2$=45°-section. Also in Figure 4C s 703C-BA (87% CR). This shows a very nice texture with strong intensities on the $\gamma$-fibre, and very low intensities on the rotated cube and cube component (at $\phi 1$=0°, and $\Phi$=0° and at $\phi 2$=45°, and $\phi 1$=45°, $\Phi$=0° respectively). Although the r-value in the rolling direction (r-value in figure 5 (right) at alpha(RD)=0°) as such is lower (see table 2), the $\Delta$r-value, which is a measure for planar anisotropy, is better because of the higher r45 (r-value in figure 5 (right) at alpha(RD)=45°) for 703C-BA (87% CR).

**Table 2:** Mechanical properties of 703C-BA in comparison to 703C.

|  |  | %CR | Rp | Rm | Ag | A50 | r-value | n | Rp/Rm | {111}/{001} |
|---|---|---|---|---|---|---|---|---|---|---|
| 703C | //RD | 75 | 300 | 486 | 18.8 | 18.8 | 0.81 | 0.188 | 0.62 | 1.4 |
| 703C-BA | //RD | 65 | 221 | 426 | 19.0 | 32.5 | 1.50 | 0.194 | 0.52 | 4 |
| 703C-BA | //RD | 75 | 265 | 422 | 19.7 | 32.5 | 1.39 | 0.200 | 0.63 | n.d. |
| 703C-BA | //RD | 87 | 275 | 430 | 20.0 | 29.3 | 1.07 | 0.198 | 0.64 | 5.2 |

The tensile properties and the r-value were determined in the rolling direction of the sheet in accordance with EN10002 and ISO10113 on a tensile specimen of 50mm gauge length.

**Claims**

1. A method for producing a high-strength steel sheet having excellent deep drawability, the method comprising

- producing a hot-rolling precursor by melting and casting a precursor comprising (in wt.%):

  - C: 0.01 to 0.2%;
  - Si: 2.0% or less;
  - Mn: 1.0 to 3.0%;
  - P: 0.005 to 0.1%;
  - S: 0.03% or less;
  - Al_sol: 0.01 to 0.1%;
  - Cr: 2.0% or less
  - N: 0.002 to 0.01%;
  - Remainder Fe and inevitable impurities;

  wherein Ti and B as impurities should be kept as low as possible and wherein N-14/48*Ti-14/11*B ≥ 0.0015%; the precursor optionally also comprising

  - Ca: 0.0005 to 0.01%;
  - Mo: 0.8% or less
  - Cu: 0.8% or less
  - Ni: 0.8% or less

- reheating the precursor material to a temperature of at least 1100°C to dissolve all AlN-precipitates or in case of a thin slab cast precursor or strip-cast precursor to be rolled immediately after casting, maintaining the temperature at a temperature of at least 1100°C to prevent AlN from forming;
- hot rolling the precursor to a hot-rolled strip by hot rolling at a finishing temperature above Ar3;
- cooling the hot-rolled strip to a temperature so as to substantially prevent precipitation of AlN in the hot-rolled strip followed by:

  c. coiling the hot rolled strip at a temperature of at most 650°C, or by
  d. coiling the hot rolled strip at a temperature of at most 700°C and subsequently cooled by full immersion of the coil in a water bath and cooled to a temperature of 600°C or lower;

- pickling the cooled hot-rolled strip;
- cold-rolling the hot-rolled strip with a reduction in thickness of between 50 and 90%;
- batch recrystallisation annealing the cold-rolled strip at a temperature of between 550°C and Ac1 to achieve a favourable crystallographic texture for deep-drawing by producing a high fraction of (111) oriented crystals;
- cooling the recrystallised strip;
- continuous intercritical annealing of the recrystallised strip by reheating the strip to a temperature between Ac1 and Ac3, holding the strip between Ac1 and Ac3 for at most 600 seconds to obtain a microstructure comprising at most 50% austenite, preferably at most 30%, followed by cooling from the holding temperature to an intermediate temperature of 350-500°C at a cooling rate of between 1 and 100°C/s and followed by

  a. cooling without delay from the intermediate temperature to a temperature between ambient temperature and 200°C at a cooling rate of between 1 and 100°C/s, or
  b. holding the strip at the intermediate temperature of between 350 and 500°C for a period of time which is not more than 600s;

- wherein the final microstructure of the strip after batch annealing and continuous annealing is a microstructure comprising ferrite and one or more second phases such as martensite, residual austenite and/or bainite.

2. Method according to claim 1 wherein the hot rolled strip is coiled at a temperature of at most 600°C.

3. Method according to claim 1 or 2 wherein the batch annealed and subsequently continuous annealed strip has a gamma-fibre texture (i.e. {111}-fibre) of at least 5 times random.

4. Method according to any one of the preceding claims wherein the strip during continuous intercritical annealing is held between Ac1 and Ac3 to obtain a microstructure comprising at most 50% austenite.

5. Method according to any one of the preceding claims wherein the reheating temperature of the precursor material is at least 1100°C, preferably at least 1150°C and more preferably at least 1200°C.

6. Method according to any one of the preceding claims wherein the temperature at which the thin slab cast precursor or strip-cast precursor is maintained is at least 1100°C, preferably at least 1125°C.

7. Method according to any one of the preceding claims wherein the heating rate to the holding temperature during intercritical annealing is between 1 to 40°C/s.

8. Method according to any one of the preceding claims wherein the strip is provided with a metallic coating by hot dip coating the intercritically annealed strip or electrogalvanising

9. Method according to any one of the preceding claims wherein the heating rate of the batch annealing is at least 5°C/hr and/or at most 50°C/hr.

10. Method according to any one of the preceding claims wherein the soaking time during batch annealing is at most 30 hours.

11. Method according to any one of the preceding claims wherein the finishing hot-rolling temperature is at least Ar3+20°C.

12. Method according to any one of the preceding claims wherein the cold-rolled strip after intercritical annealing is cooled from the intermediate temperature to ambient temperature without delay at a cooling rate of between 1 to 100°C/s.

13. Method according to any one of claims 1-12 wherein the cold-rolled strip after intercritical annealing is held at the intermediate temperature for a period of at most 600 seconds and then cooled from the intermediate temperature to ambient temperature, preferably at a cooling rate of between 1 to 100°C/s.

14. A high-strength steel sheet having excellent deep drawability, produced according to the process of any one of claims 1 to 13, having a chemical composition (in wt.%) of:

   • C: 0.01 to 0.2%;
   • Si: 2.0% or less;
   • Mn: 1.0 to 3.0%;
   • P: 0.005 to 0.1%;
   • S: 0.03% or less;
   • Al_sol: 0.01 to 0.1%;
   • Cr: 2.0% or less
   • N: 0.002 to 0.01%;
   • Remainder Fe and inevitable impurities;

   wherein Ti and B as impurities should be kept as low as possible and wherein $N-14/48*Ti-14/11*B \geq 0.0015\%$; the precursor optionally also comprising

   • Ca: 0.0005 to 0.01%;
   • Mo: 0.8% or less
   • Cu: 0.8% or less
   • Ni: 0.8% or less

   wherein the steel sheet was produced by hot-rolling, cold-rolling, recrystallising batch-annealing and intercritical continuous annealing, and wherein the final microstructure of the strip after batch annealing and continuous annealing is a microstructure comprising ferrite and one or more second phases such as martensite, residual austenite and/or bainite, and wherein the annealed sheet has an r-value in the rolling direction of at least 1.2.

**15.** Steel according to claim 14 wherein the batch annealed and subsequently continuous annealed strip has a gamma-fibre texture (i.e. {111}-fibre) of at least 5 times random.

**Patentansprüche**

**1.** Verfahren zur Herstellung eines hochfesten Stahlblechs mit hervorragender Tiefziehbarkeit, wobei das Verfahren aufweist:

- Herstellen eines Warmwalzvorläufers durch Schmelzen und Gießen eines Vorläufers, der (in Gew.%) aufweist:

  • C: 0,01 bis 0,2 %;
  • Si: 2,0 % oder weniger;
  • Mn: 1,0 bis 3,0 %;
  • P: 0,005 bis 0,1 %;
  • S: 0,03 % oder weniger;
  • Al_sol: 0,01 bis 0,1 %;
  • Cr: 2,0 % oder weniger;
  • N: 0,002 bis 0,01 %;
  • Rest-Fe und unvermeidbare Verunreinigungen;

  wobei Ti und B als Verunreinigungen so gering wie möglich gehalten werden sollten, und wobei N-14/48*Ti-14/11*B ≥ 0,0015 %; wobei der Vorläufer optional ebenfalls aufweist

  • Ca: 0,0005 bis 0,01 %;
  • Mo: 0,8 % oder weniger;
  • Cu: 0,8 % oder weniger;
  • Ni: 0,8 % oder weniger;

- Nachwärmen des Vorläufermaterials auf eine Temperatur von mindestens 1100 °C, um alle AlN-Niederschläge aufzulösen, oder im Fall eines Dünnbrammenvorläufers oder Bandgussvorläufers, die unmittelbar nach dem Gießen gewalzt werden sollen, die Temperatur auf einer Temperatur von mindestens 1100 °C aufrechtzuerhalten, um die Bildung von AlN zu verhindern;
- Warmwalzen des Vorläufers zu einem Warmband durch Warmwalzen bei einer Endtemperatur über Ar3;
- Abkühlen des Warmbands auf eine Temperatur, bei der ein Abscheiden von AlN in dem Warmband verhindert wird, gefolgt von:

  c. Haspeln des Warmbands bei einer Temperatur von maximal 650 °C, oder durch
  d. Haspeln des Warmbands bei einer Temperatur von maximal 700 °C und anschließend gekühlt durch vollständiges Eintauchen der Rolle in ein Wasserbad und gekühlt auf eine Temperatur von 600 °C oder niedriger;

- Beizen des abgekühlten Warmbands;
- Kaltwalzen des Warmbands mit einer Reduzierung der Dicke zwischen 50 und 90 %;
- Rekristallisationshaubenglühen des Kaltbands bei einer Temperatur zwischen 550 °C und Ac1, um eine günstige kristallografische Textur zum Tiefziehen durch Herstellen eines hohen Anteils (111) von ausgerichteten Kristallen zu erzielen;
- Abkühlen des rekristallisierten Bands;
- interkritisches Durchlaufglühen des rekristallisierten Bands durch Nachwärmen des Bands auf eine Temperatur zwischen Ac1 und Ac3, wobei das Band zwischen Ac1 und Ac3 maximal 600 Sekunden gehalten wird, um eine Mikrostruktur zu erhalten, die maximal 50 % Austenit, bevorzugt maximal 30 % aufweist, gefolgt von einem Abkühlen von der Haltetemperatur auf eine Zwischentemperatur von 350 bis 500 °C bei einer Abkühlgeschwindigkeit zwischen 1 und 100 °C/s, und gefolgt von

  a. Abkühlen ohne Verzögerung von der Zwischentemperatur auf eine Temperatur zwischen Umgebungstemperatur und 200 °C bei einer Abkühlgeschwindigkeit zwischen 1 und 100 °C/s, oder
  b. Halten des Bands auf der Zwischentemperatur zwischen 350 und 500 °C über einen Zeitraum, der nicht länger als 600 s ist;

- wobei die endgültige Mikrostruktur des Bands nach dem Haubenglühen und Durchlaufglühen eine Mikrostruktur ist, die Ferrit und eine oder mehrere Phasen aufweist wie beispielsweise Martensit, Rest-Austenit und/oder Bainit.

2. Verfahren nach Anspruch 1, wobei das Warmband bei einer Temperatur von maximal 600 °C gehaspelt wird.

3. Verfahren nach Anspruch 1 oder 2, wobei das haubengeglühte und anschließend durchlaufgeglühte Band eine Gamma-Fasertextur (d.h. {111}-Faser) hat der 5 mahl random ist.

4. Verfahren nach einem der vorhergehenden Ansprüche, wobei das Band während des interkritischen Durchlaufglühens zwischen Ac1 und Ac3 gehalten wird, um eine Mikrostruktur zu erhalten, die maximal 50 % Austenit aufweist.

5. Verfahren nach einem der vorhergehenden Ansprüche, wobei die Nachwärmtemperatur des Vorläufermaterials mindestens 1100 °C, bevorzugt mindestens 1150 °C und noch bevorzugter mindestens 1200 °C beträgt.

6. Verfahren nach einem der vorhergehenden Ansprüche, wobei die Temperatur, auf der der Dünnbrammenvorläufer oder Bandgussvorläufer gehalten wird, mindestens 1100 °C, bevorzugt mindestens 1125 °C beträgt.

7. Verfahren nach einem der vorhergehenden Ansprüche, wobei die Aufheizgeschwindigkeit auf die Haltetemperatur während des interkritischen Glühens zwischen 1 bis 40 °C/s beträgt.

8. Verfahren nach einem der vorhergehenden Ansprüche, wobei das Band mit einer Metallbeschichtung versehen wird durch Heißtauchbeschichtung des interkritisch geglühten Bands oder durch galvanische Verzinkung.

9. Verfahren nach einem der vorhergehenden Ansprüche, wobei die Aufheizgeschwindigkeit beim Haubenglühen mindestens 5 °C/Std. und/oder maximal 50 °C/Std. beträgt.

10. Verfahren nach einem der vorhergehenden Ansprüche, wobei die Haltezeit während des Haubenglühens maximal 30 Stunden beträgt.

11. Verfahren nach einem der vorhergehenden Ansprüche, wobei die Warmwalzendtemperatur mindestens Ar3 + 20 °C beträgt.

12. Verfahren nach einem der vorhergehenden Ansprüche, wobei das Kaltband nach dem interkritischen Glühen ohne Verzögerung mit einer Abkühlgeschwindigkeit zwischen 1 und 100 °C/s von der Zwischentemperatur auf Umgebungstemperatur abgekühlt wird.

13. Verfahren nach einem der Ansprüche 1 bis 12, wobei das Kaltband nach dem interkritischen Glühen für einen Zeitraum von maximal 600 Sekunden auf der Zwischentemperatur gehalten wird und anschließend mit einer Abkühlgeschwindigkeit zwischen 1 und 100 °C/s von der Zwischentemperatur auf Umgebungstemperatur abgekühlt wird.

14. Hochfestes Stahlblech mit hervorragender Tiefziehbarkeit, hergestellt gemäß dem Prozess nach einem der Ansprüche 1 bis 13, das eine chemische Zusammensetzung (in Gew.%) aufweist von;

- C: 0,01 bis 0,2 %;
- Si: 2,0 % oder weniger;
- Mn: 1,0 bis 3,0 %;
- P: 0,005 bis 0,1 %;
- S: 0,03 % oder weniger;
- A1_sol: 0,01 bis 0,1%;
- Cr: 2,0 % oder weniger;
- N: 0,002 bis 0,01 %;
- Rest-Fe und unvermeidbare Verunreinigungen;

wobei Ti und B als Verunreinigungen so gering wie möglich gehalten werden sollten, und
wobei N-14/48*Ti-14/11*B $\geq$ 0,0015 %;
wobei der Vorläufer optional ebenfalls aufweist

• Ca: 0,0005 bis 0,01 %;
• Mo: 0,8 % oder weniger;
• Cu: 0,8 % oder weniger;
• Ni: 0,8 % oder weniger;

wobei der Stahl durch Warmwalzen, Kaltwalzen, Rekristallisationshaubenglühen und interkritisches Durchlaufglühen hergestellt wurde, und wobei die endgültige Mikrostruktur des Bands nach dem Haubenglühen und Durchlaufglühen eine Mikrostruktur ist, die die Ferrit und eine oder mehrere zweite Phasen aufweist wie beispielsweise Martensit, Rest-Austenit und/oder Bainit, und wobei der geglühte Stahl einen r-Wert in der Walzrichtung aufweist von mindestens 1,2.

15. Stahl nach Anspruch 14, wobei das haubengeglühte und anschließend durchlaufgeglühte Band eine Gamma-Fasertextur (d.h. {111}-Faser) hat der 5 mahl random ist.

**Revendications**

1. Procédé de production d'une tôle d'acier à haute résistance ayant une excellente aptitude à l'emboutissage profond, le procédé comprenant

la production d'un précurseur de laminage à chaud par fusion et coulée d'un précurseur comprenant (en % en poids) :

• C : 0,01 à 0,2% ;
• Si : 2,0 % ou moins ;
• Mn : 1,0 à 3,0 % ;
• P : 0,005 à 0,1% ;
• S : 0,03 % ou moins ;
• Al_sol : 0,01 à 0,1 % ;
• Cr : 2,0 % ou moins ;
• N : 0,002 à 0,01 % ;
• le reste étant du Fe et des impuretés inévitables ;

dans lequel du Ti et du B, en tant qu'impuretés, doivent être maintenus à une teneur aussi faible que possible et dans lequel N-14/48*Ti-14/11*B $\geq$ 0,0015 % ;
le précurseur comprenant aussi éventuellement

• Ca : 0,0005 à 0,01 % ;
• Mo : 0,8 % ou moins ;
• Cu : 0,8 % ou moins ;
• Ni : 0,8 % ou moins ;
- la réchauffe du matériau précurseur à une température d'au moins 1100 °C pour dissoudre tous les précipités d'AlN ou, dans le cas d'un précurseur coulé en bande métallique mince ou d'un précurseur coulé en ruban à laminer immédiatement après le coulage, maintenir la température à une température d'au moins 1100 °C de façon à empêcher la formation de l'AlN;
- le laminage à chaud du précurseur en un ruban laminé à chaud par laminage à une température de finition supérieure à Ar3 ;
- le refroidissement du ruban laminé à chaud à une température permettant d'empêcher sensiblement une précipitation d'AlN dans le ruban laminé à chaud, suivi par ;

c. le bobinage du ruban laminé à chaud à une température maximale de 650 °C, ou par
d. le bobinage du ruban laminé à chaud à une température maximale de 700 °C et ultérieurement refroidi par immersion complète de la bobine dans un bain d'eau et refroidi à une température inférieure ou égale à 600 °C ;

- le décapage du ruban laminé à chaud refroidi ;
- le laminage à froid du ruban laminé à chaud avec une réduction d'épaisseur comprise entre 50 et 90 % ;
- le recuit base de recristallisation du ruban laminé à froid à une température comprise entre 550 °C et Ac1 de façon à obtenir une texture cristallographique favorable à un emboutissage profond par production d'une fraction élevée de cristaux orientés (111) ;

- le refroidissement du ruban ayant fait l'objet d'une recristallisation ;
- le recuit intercritique continu du ruban ayant fait l'objet d'une recristallisation par réchauffe du ruban à une température comprise entre Ac1 et Ac3, le maintien du ruban entre Ac1 et Ac3 pendant au maximum 600 secondes de façon à obtenir une microstructure comprenant au maximum 50 % d'austénite, idéalement au maximum 30 %, suivi par un refroidissement de la température de maintien à une température intermédiaire comprise entre 350 et 500 °C à une vitesse de refroidissement comprise entre 1 et 100 °C/s et suivi par

  a. le refroidissement immédiat de la température intermédiaire à une température comprise entre la température ambiante et 200 °C à une vitesse de refroidissement comprise entre 1 et 100 °C/s, ou
  b. le maintien du ruban à la température intermédiaire entre 350 et 500 °C pendant une période inférieure ou égale à 600 s ;

- dans lequel la microstructure finale du ruban après le recuit base et le recuit continu est une microstructure comprenant de la ferrite et une ou plusieurs secondes phases telles que martensite, austénite résiduelle et/ou bainite.

2. Procédé selon la revendication 1, dans lequel le ruban laminé à chaud est bobiné à une température maximale de 600 °C.

3. Procédé selon la revendication 1 ou 2, dans lequel le ruban ayant fait l'objet d'un recuit base et ultérieurement d'un recuit continu a une texture de fibre gamma (c'est-à-dire de fibre {111}) d'au moins 5 fois une distribution aléatoire.

4. Procédé selon l'une quelconque des revendications précédentes, dans lequel, pendant le recuit intercritique continu, le ruban est maintenu entre Ac1 et Ac3 de façon à obtenir une microstructure comprenant au maximum 50 % d'austénite.

5. Procédé selon l'une quelconque des revendications précédentes, dans lequel la température de réchauffe du matériau précurseur est supérieure ou égale à 1100 °C, idéalement supérieure ou égale à 1150 °C, et l'on préfère davantage supérieure ou égale à 1200 °C.

6. Procédé selon l'une quelconque des revendications précédentes, dans lequel la température à laquelle est maintenu le précurseur coulé en bande métallique mince ou le précurseur coulé en ruban est supérieure ou égale à 1100 °C, idéalement supérieure ou égale à 1125 °C.

7. Procédé selon l'une quelconque des revendications précédentes, dans lequel la vitesse de chauffe à la température de maintien pendant le recuit intercritique est comprise entre 1 et 40 °C/s.

8. Procédé selon l'une quelconque des revendications précédentes, dans lequel le ruban est pourvu d'un revêtement métallique par placage par immersion à chaud du ruban ayant fait l'objet d'un recuit intercritique ou par électrozingage.

9. Procédé selon l'une quelconque des revendications précédentes, dans lequel la vitesse de chauffe du recuit base est au moins 5 °C/h et/ou au maximum 50 °C/h.

10. Procédé selon l'une quelconque des revendications précédentes, dans lequel le temps de trempe pendant le recuit base est au maximum 30 heures.

11. Procédé selon l'une quelconque des revendications précédentes, dans lequel la température de laminage à chaud de finition est au moins Ar3+20 °C.

12. Procédé selon l'une quelconque des revendications précédentes, dans lequel le ruban laminé à froid, après avoir fait l'objet d'un recuit intercritique, est refroidi immédiatement de la température intermédiaire à la température ambiante à une vitesse de refroidissement comprise entre 1 et 100 °C/s.

13. Procédé selon l'une quelconque des revendications 1 à 12, dans lequel le ruban laminé à froid, après avoir fait l'objet d'un recuit intercritique, est maintenu à la température intermédiaire pendant une période maximale de 600 secondes et est ensuite refroidi de la température intermédiaire à la température ambiante à une vitesse de refroidissement comprise idéalement entre 1 et 100 °C/s.

**14.** Tôle d'acier à haute résistance ayant une excellente aptitude à l'emboutissage profond, produite selon le procédé selon l'une quelconque des revendications 1 à 13, ayant une composition chimique (en % en poids) de :

- C : 0,01 à 0,2 % ;
- Si : 2,0 % ou moins ;
- Mn : 1,0 à 3,0 %;
- P : 0,005 à 0,1 % ;
- S : 0,03 % ou moins ;
- Al_sol : 0,01 à 0,1 % ;
- Cr : 2,0 % ou moins ;
- N : 0,002 à 0,01 % ;
- le reste étant du Fe et des impuretés inévitables ;

dans laquelle du Ti et du B, en tant qu'impuretés, doivent être maintenus à une teneur aussi faible que possible et dans laquelle N-14/48*Ti-14/11*B $\geq$ 0,0015 % ;
le précurseur comprenant aussi éventuellement

- Ca : 0,0005 à 0,01 % ;
- Mo : 0,8 % ou moins ;
- Cu : 0,8 % ou moins ;
- Ni : 0,8 % ou moins ;

dans laquelle la tôle d'acier a été produite par laminage à chaud, laminage à froid, recuit base de recristallisation et recuit intercritique continu, et dans laquelle la microstructure finale du ruban, après avoir fait l'objet du recuit base et du recuit continu, est une microstructure comprenant de la ferrite et une ou plusieurs secondes phases telles que martensite, austénite résiduelle et/ou bainite, et dans laquelle la feuille ayant fait l'objet d'un recuit a une valeur r dans la direction de laminage d'au moins 1,2.

**15.** Acier selon la revendication 14, dans lequel le ruban ayant fait l'objet d'un recuit base et ultérieurement d'un recuit continu, a une texture de fibre gamma (c'est-à-dire de fibre {111}) d'au moins 5 fois une distribution aléatoire.

**703C**

20 µm

FIGURE 2

**703C-BA**

20 µm

FIGURE 3

FIGURE 1

FIGURE 4A

FIGURE 4B

FIGURE 4C

FIGURE 5

FIGURE 6

FIGURE 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2439291 A1

### Non-patent literature cited in the description

- **BLECK, W. ; PHIU-ON, K.** Grain Refinement and Mechanical Properties in Advanced High Strength Sheet Steels, HSLA Steels 2005. *Fifth International Conference on HSLA Steels,* 08 October 2005

- The Book of Steel. Lavoisier Publishing, 1996, 1272